# EUROPÄISCHE PATENTSCHRIFT

(11) **EP 1 066 702 B1**
(45) Veröffentlichungstag und Bekanntmachung des Hinweises auf die Patenterteilung: **06.03.2002**
(21) Anmeldenummer: 99922080.9
(22) Anmeldetag: 31.03.1999
(51) Int. Cl.: H04L 12/403, H04L 29/14

(54) **BUSMASTERUMSCHALTEINHEIT**
BUS MASTER SWITCH UNIT
UNITE DE COMMUTATION DU BUS MAITRE

(30) Priorität: 03.04.1998 DE 19815097
(43) Veröffentlichungstag der Anmeldung: 10.01.2001
(73) Patentinhaber: SIEMENS AKTIENGESELLSCHAFT, 80333 München (DE)
(72) Erfinder: GRIESSBACH, Gunter, D-09423 Gelenau (DE); RAMM, Enrico, D-09116 Chemnitz (DE); WEISSBACH, Bernhard, D-09669 Frankenberg (DE)
(86) Internationale Anmeldenummer: DE9900973
(87) Internationale Veröffentlichungsnummer: WO9952245

(56) Entgegenhaltungen:
- GB-A- 2 146 810
- US-A- 5 313 386
- VOLZ M: "PROFIBUS-DP - DER SCHNELLE BRUDER. STANDARDISIERTE KOMMUNIKATION FUR DIE DEZENTRALE PERIPHERIE" ELEKTRONIK, Bd. 42, Nr. 26, 28. Dezember 1993 (1993-12-28), Seiten 50-53, 58 - 60, XP000421408 ISSN: 0013-5658

## Beschreibung

Die vorliegende Erfindung betrifft eine Busmasterumschalteinheit bzw. ein Verfahren zum Betreiben redundanter Busmaster.

An ein Bussystem sind üblicherweise mehrere Busteilnehmer angeschlossen, wobei die Datenübertragung über ein Bussystem gemäß einem definierten Protokoll erfolgt. Spezielle Datenübertragungsprotokolle erfordern, daß mindestens einer der Busteilnehmer als sogenannter Busmaster funktioniert, wobei der Busmaster aktiv das Übertragungsprotokoll betreibt.

Fällt in einem solchen Bussystem der Busmaster aus, so zieht dies üblicherweise zumindest eine Funktionsbeeinträchtigung der weiteren Busteilnehmer, wenn nicht sogar einen Funktionsausfall sämtlicher Busteilnehmer nach sich, weil ohne den Busmaster keine Datenübertragung über den Bus möglich ist.

Als Bussystem kommt z.B. der Profibus in Betracht, während als Busmaster z.B. Zentraleinheiten speicherprogrammierbarer Steuerungen zum Einsatz kommen können. Über den Bus sind die Zentraleinheit mit Peripherieeinheiten, insbesondere auch dezentralen, unmittelbar im gesteuerten und/oder überwachten Prozeß vorgesehenen Peripherieeinheiten kommunikativ verbindbar, wobei einerseits die Zustände des technischen Prozesses von den Peripherieeinheiten aufgenommen werden und zyklisch an die Zentraleinheiten übermittelt werden und andererseits Steueranweisungen zyklisch an die Peripherieeinheiten übermittelt werden.

Die Aufgabe der vorliegenden Erfindung besteht darin, einerseits eine Umschalteinheit, vermittels der jeweils ein Busmaster aus einer Gruppe redundanter Busmaster an ein nichtredundantes Bussystem anschließbar ist und andererseits ein Verfahren zum Betreiben redundanter Busmaster an einem nichtredundanten Bussystem anzugeben.

Diese Aufgabe wird für die Vorrichtung mit einer Busmasterumschalteinheit zum Anschalten eines Busmasters aus einer Gruppe von mindestens zwei redundanten Busmastern an ein nichtredundantes Bussystem gelöst, wobei die Busmasterumschalteinheit zumindest Anschlüsse zum Anschluß jeweils eines Busmasters und zumindest einen Anschluß zum Anschluß des nichtredundanten Bussystems und zumindest einen Busumschalter und an den Bus angeschlossene Mittel zur Ansteuerung des Busumschalters aufweist, wobei das oder die Mittel ausschließlich durch den oder die Busmaster ansteuerbar sind und wobei der Bus-umschalter je nach Schaltstellung eine Anschaltung jeweils eines an die Busmasterumschalteinheit angeschlossenen Busmasters an den Bus bewirkt.

Ferner löst auch ein Verfahren zum Betreiben redundanter Busmaster an einem nichtredundanten Bussystem, wobei zum Anschalten eines Busmasters aus einer Gruppe von mindestens zwei redundanten Busmastern an das Bussystem eine Busmasterumschalteinheit vorgesehen ist, die zumindest Anschlüsse zum Anschluß jeweils eines Busmasters und zumindest einen Anschluß zum Anschluß des nichtredundanten Bussystems und zumindest einen Busumschalter und an den Bus angeschlossene Mittel zur Ansteuerung des Busumschalters aufweist, wobei das oder die Mittel ausschließlich durch den oder die Busmaster angesteuert werden und wobei durch den Busumschalter je nach Schaltstellung eine Anschaltung jeweils eines an die Busmasterumschalteinheit angeschlossenen Busmasters an den Bus bewirkt wird, diese Aufgabe.

Eine schaltungstechnisch einfache Realisierung der Busmasterumschalteinheit ist möglich, wenn das oder die Mittel Ausgänge aufweisen, welche bei einer entsprechenden Ansteuerung durch den oder die Busmaster einen vorgebbaren oder vorgegebenen logischen Zustand zur Ansteuerung des Busumschalters einnehmen und damit eine definierte Schaltstellung des Busumschalters bewirken.

Die schaltungstechnische Realisierbarkeit der Busmasterumschalteinheit wird weiter erleichtert, wenn die Mittel als anwendungsspezifische integrierte Schaltkreise - ASIC - mit einer Mehrzahl von Ein- bzw. Ausgängen ausgebildet sind, wobei die Ein- bzw. Ausgänge vom jeweils angeschlossenen Busmaster schreib- bzw. lesbar sind.

Wenn bei einem durch den Busmaster bewirkten Datentransfer auf dem Bus ein periodischer Signalwechsel zumindest eines Ausgangs des jeweiligen anwendungsspezifischen integrierten Schaltkreises bewirkbar ist und dieser Signalwechsel für den anderen Busmaster über zumindest einen Eingang des jeweiligen anwendungsspezifischen integrierten Schaltkreises erkennbar ist, ist eine besonders effiziente Überwachungsmöglichkeit des gerade aktiven Busmasters durch den redundanten, gerade passiven Busmaster gegeben. Der periodische Signalwechsel stellt so etwas wie ein "Lebenszeichen" des aktiven Busmasters dar. Findet während einer vorgegebenen oder vorgebbaren Zeitspanne kein Signalwechsel statt, so wird dies durch den passiven Busmaster dahingehend ausgewertet, daß der aktive Busmaster ausgefallen ist. Der passive Busmaster kann dann eine Trennung des ausgefallenen Busmasters vom Bus bewirken und sich selbst als Busmaster am Bus "installieren".

Wenn entweder ein Datentransfer zwischen einem ersten an die Busmasterumschalteinheit angeschlossenen Busmaster und einem zweiten an die Busmasterumschalteinheit angeschlossenen Busmaster über die Ein- bzw. Ausgänge der anwendungsspezifischen integrierten Schaltkreise erfolgt oder der Bus zumindest eine Datenleitung umfaßt und die Datenleitung jedem an die Busmasterumschalteinheit anschließbaren Busmaster unter Umgehung des Busumschalters zugeführt ist, besteht die Möglichkeit, auch dem passiven Busmaster die am Bus übertragenen Daten zu übermitteln. Dies geschieht entweder indem der aktive Busmaster dem passiven Busmaster die Daten über einen zwischen den anwendungsspezifischen integrierten Schaltkreisen realisierten Kommunikationsweg übermittelt oder indem der passive Busmaster den Busverkehr jederzeit durch einen direkten Anschluß zumindest an die Datenleitung mithört.

Weitere Merkmale, Vorteile und Anwendungsmöglichkeiten der vorliegenden Erfindung ergeben sich aus den Unteransprüchen, der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung.

Dabei zeigen
- FIG 1: eine Prinzipdarstellung einer Busmasterumschalteinheit,
- FIG 2: ein Blockschaltbild einer Busmasterumschalteinheit und
- FIG 3, 4: Ausgestaltungen der Busmasterumschalteinheit.

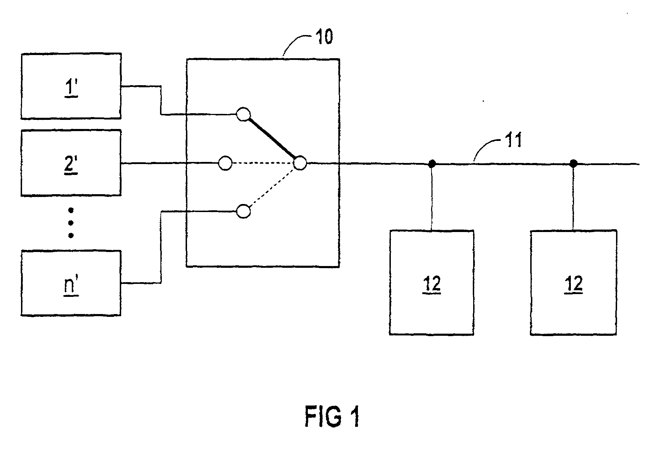

Gemäß der Darstellung in FIG 1 sind an ein nichtredundantes Bussystem 11 mittels einer Busmasterumschalteinheit 10 mehrere Busmaster 1', 2'...n' anschließbar. Die Busmasterumschalteinheit 10 verbindet jeweils einen der an sie angeschlossenen Busmaster 1', 2'...n' mit dem nichtredundanten Bussystem 11 an das beispielsweise Peripheriebaugruppen 12 anschließbar sind.

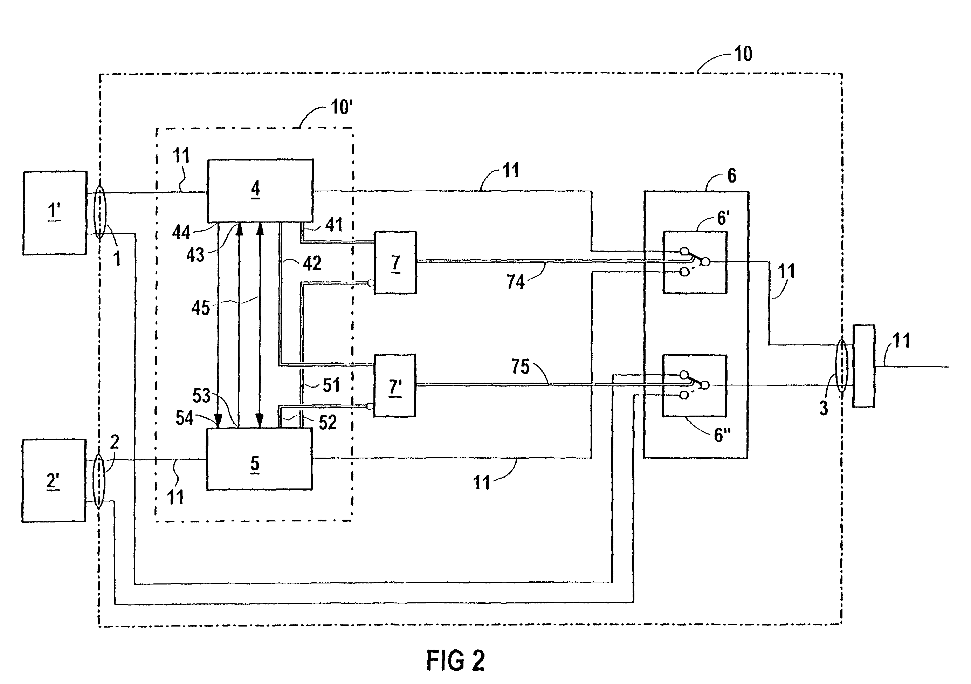

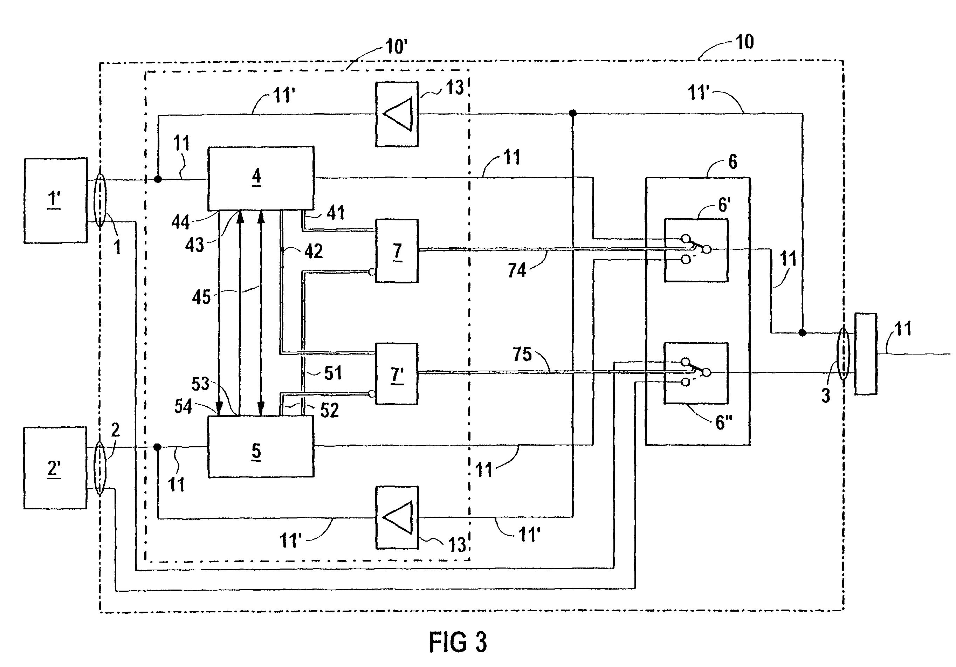

Zur weiteren Erläuterung des Ausführungsbeispiels soll im folgenden davon ausgegangen werden, daß das nichtredundante Bussystem 11 seriell synchron arbeitet. Im Bus 11 werden neben einer Datenleitung 11' und einer Taktleitung zwei Steuerleitungen, eine Alarmleitung, eine Readyleitung, eine Leitung zum Sperren der Ausgänge der Peripheriebaugruppen 12 und die Stromversorgung geführt. Die Einzelleitungen des Bussystems 11 sind in FIG 2 nicht dargestellt (lediglich im Zusammenhang mit der Ausgestaltung der Busmasterumschaltung 10 gemäß der weiter unten zu beschreibenden FIG 3 ist die Datenleitung 11' als Einzelleitung dargestellt).

Grundsätzlich wird die Datenleitung 11' durch jeden, an das Bussystem 11 angeschlossenen Busteilnehmer durchgeschleift.

Die Datenübertragung erfolgt nach einem Protokollsystem, welches eine Adressierung der an den Bus 11 angeschlossenen Busteilnehmer 10, 12 und eine Datenübertragung für verschiedene Datenlängen unterstützt.

Für den Anschluß einfacher Peripheriebaugruppen 12, z.B. einer Digitaleingabe- bzw. Digitalausgabebaugruppe 12, ist ein BUS-ASIC vorgesehen. Dieser BUS-ASIC interpretiert das Busprotokoll und stellt in der im Zusammenhang mit der vorliegenden Erfindung relevanten Betriebsart in Richtung der angeschlossenen Peripherie eine Schnittstelle für 16 Digitaleingänge und 16 Digitalausgänge zur Verfügung, wobei selbstverständlich auch Ausführungsformen mit mehr oder weniger als 16 Ein- oder Ausgängen denkbar sind; üblich ist jedoch eine ganzzahlig durch acht teilbare Anzahl von Ein- oder Ausgängen.

Ein derartiger BUS-ASIC wird in der Busmasterumschalteinheit 10 zur Steuerung bzw. Auslösung der Umschaltvorgänge eingesetzt. Wie im folgenden noch anhand von FIG 2 beschrieben wird, ist dazu jeder Busmaster 1', 2'...n' an einen solchen BUS-ASIC 4, 5 angeschlossen.

Der aktiv das für das Bussystem 11 vereinbarte Übertragungsprotokoll betreibende Busmaster 1', 2'...n' ist damit in der Lage, über das Bussystem 11 diese 16 Eingangsinformationen zu erhalten und kann darüber hinaus auch die 16 Ausgangsinformationen verschicken.

Dazu sind den Eingangs- und Ausgangskanäle vorgegebene bzw. vorgebbare Adressen zugewiesen. Folglich ist jedes einzelne Bit der 16 Eingangsinformationen separat lesbar und jedes einzelne Bit der 16 Ausgangsinformationen separat schreibbar.

Am Bus 11 ist eine Vielzahl von BUS-ASICs betreibbar. Die BUS-ASICs sind in FIG 1 jedoch nicht dargestellt. Wie im folgenden anhand der Darstellung gemäß FIG 2 gezeigt wird, werden die zum Betrieb am Bus 11 geeigneten BUS-ASICs in einer Busmasterumschalteinheit 10 zum Anschalten jeweils eines an die Busmasterumschalteinheit 10 angeschlossenen Busmasters 1', 2'...n' an das nichtredundante Bussystem 11 verwendet.

Besteht nun die Forderung, die Busmaster 1', 2' für ein Bussystem 11 redundant, d.h. mehrfach, z.B. doppelt, auszuführen, arbeitet stets ein Busmaster 1', 2' aktiv mit der an den Bus 11 angeschlossenen Peripherie 12, d.h. er liest Eingänge und schreibt Ausgänge.

Der passive Busmaster 2', 1' hingegen muß, um jederzeit in den aktiven Zustand wechseln zu können, die Operationen mit der Peripherie 12 zumindest im Speicher simulieren.

Um dabei dem jeweils passiven Busmaster 2', 1' die Informationen über die jeweils aktuellen Zustände der Prozeßperipherie 12 zu übermitteln, gibt es prinzipiell zwei Möglichkeiten: Im Rahmen der ersten Möglichkeit erfolgt eine unmittelbare Übertragung der die aktuellen Zustände der Prozeßperipherie repräsentierenden Daten vom aktiven Busmaster 1', 2' zum passiven Busmaster 2', 1'. Im Rahmen der zweiten Möglichkeit interpretiert auch der passive Busmaster 2', 1' das Busprotokoll und liest die Zustände der Prozeßperipherie 12, z.B. die Eingangsdaten, mit. Man spricht in diesem Falle vom sogenannten "Mithörbetrieb".

Gemäß der Darstellung in FIG 2 besitzt die Busmasterumschalteinheit 10, im folgenden kürzer als Umschalteinheit 10 bezeichnet, zwei Anschlüsse 1, 2 für jeweils einen Busmaster 1', 2' und einen Anschluß 3 zur Anschaltung der Peripheriebaugruppen 12 über den nichtredundanten Bus 11, wobei selbstverständlich auch Ausführungsformen der Umschalteinheit 10 mit mehr als zwei Anschlüssen 1, 2 für Busmaster 1', 2' - wie bereits in FIG 1 dargestellt - und mit mehr als einem Anschluß 3 für ein Bussystem 11 denkbar sind. Bei mehr als zwei anschließbaren Busmastern 1', 2' ist der Busumschalter 6 z.B. als Multiplexer ausgebildet.

Jedem Busmasteranschluß 1, 2 ist ein BUS-ASIC 4, 5 zugeordnet, der bezüglich der Datenleitung an erster Stelle in die Kette der Peripherie-ASICs eingeschleift ist.

Grundsätzlich dienen BUS-ASICs derart, wie die in FIG 2 dargestellten BUS-ASICs 4, 5 dem Anschluß der Peripherie an das Bussystem 11. Man unterscheidet zwischen Bussystemen, bei denen die BUS-ASICs hintereinander geschaltet sind und Bussystemen mit paralleler Anschaltung der BUS-ASICs. Im Falle einer Hintereinanderschaltung der jeweiligen BUS-ASICs sind diese in einer Kette angeordnet, wobei die BUS-ASICs 4, 5 gemäß dem Ausführungsbeispiel an erster Stelle der Kette, d.h. gleich hinter dem jeweiligen Busmaster 1', 2' angeordnet. Die Schnittstellen zu den Ein- bzw. Ausgängen der BUS-ASICs 4, 5 bilden die Peripherieseite des BUS-ASICs 4, 5. Die BUS-ASICs 4, 5 benutzen diese Peripherie nur zur Steuerung der Busumschaltung 6, die für den Anwender vollkommen verborgen erfolgt. An die nachfolgenden, also außerhalb der Busmasterumschalteinheit 10 an den Bus 11 anschließbaren BUS-ASICs sind echte Eingänge oder Ausgänge, also z.B. externe Sensorik oder Aktorik eines zu steuernden und/oder überwachenden technischen Prozesses anschließbar.

Nach den BUS-ASICs 4, 5 ist der eigentliche Busumschalter 6 angeordnet. Mit dem Busumschalter 6 kann wahlweise der Busmaster 1' oder der Busmaster 2' auf die Peripheriebaugruppen 12 durchgeschaltet werden. Da die beiden BUS-ASICs 4, 5 vor der Busumschaltung 6 angeordnet sind, kann jeder Busmaster 1', 2' jederzeit - also unabhängig von der gerade aktuellen Schaltstellung des Busumschalters 6 - den ihm zugeordneten ASIC 4, 5 bedienen.

Der Busumschalter 6 wird mittels der einzelnen Ausgangsbits der jeweils 16 Ausgangsinformationen der jeweiligen BUS-ASICs 4, 5 angesteuert. Die jeweiligen logischen Zustände der Ausgangsbits sind an dafür vorgesehenen Anschlußstellen der BUS-ASICs 4, 5 abgreifbar. Im Ausführungsbeispiel gemäß FIG 2 werden an den Anschlußstellen 41, 42 des BUS-ASICs 4 die logischen Zustände zweier Ausgangsbits des BUS-ASICs 4 abgegriffen; analog werden an den Anschlußstellen 51, 52 des BUS-ASICs 5 die logischen Zustände zweier Ausgangsbits des BUS-ASICs 5 abgegriffen.

Die logischen Zustände der jeweiligen Ausgangsbits werden einer Umschaltlogik 7, 7' zugeführt, wobei einerseits das Ausgangsbit 41 des BUS-ASICs 4 und das invertierte Ausgangsbit 51 des BUS-ASICs 5 der Umschaltlogik 7 und andererseits das Ausgangsbit 42 des BUS-ASICs 4 und das invertierte Ausgangsbit 52 des BUS-ASICs 5 der Umschaltlogik 7' zugeführt werden.

Mit der von der Umschaltlogik 7, 7' bewirkten logischen UND-Verknüpfung der jeweils zugeführten Signale 41, 51 bzw. 42, 52 werden Umschaltsignale 74, 75 zur Ansteuerung der Umschalteinheit 6 generiert, wobei das Umschaltsignal 74 von der Umschaltlogik 7 generiert wird und zur Ansteuerung eines zur Busumschaltung vorgesehenen Schaltelements 6' und das Umschaltsignal 75 von der Umschaltlogik 7' generiert wird und zur Ansteuerung eines zur Stromversorgungsumschaltung vorgesehenen Schaltelements 6'' vorgesehen ist. Die Schaltelemente 6', 6" bilden zusammen die Umschalteinheit 6.

Eine Besonderheit der Realisierung gemäß dem Ausführungsbeispiel besteht daher darin, daß einerseits sowohl die Datenleitungen als auch die Versorgungsleitungen umschaltbar sind und daß andererseits die Datenleitungen und die Versorgungsleitungen grundsätzlich getrennt voneinander umschaltbar sind.

Wenn die Signale 41, 42 des ASICs 4 den Zustand logisch 1 und die Signale 51, 52 des ASICs 5 den Zustand logisch 0 innehaben bewirkt die Verknüpfung ([41 UND NICHT 51] = ["1" UND NICHT "0"] = ["1" und "1"] = "1") an der Umschaltlogik 7, daß auch das Umschaltsignal 74 den Zustand logisch 1 innehat. Analog bewirkt die Verknüpfung ([42 UND NICHT 52] = ["1" UND NICHT "0"] = ["1" und "1"] = "1") an der Umschaltlogik 7, daß auch das Umschaltsignal 75 den Zustand logisch 1 innehat. Diese beiden Umschaltsignale 74, 75 bewirken eine definierte Schaltstellung der Schaltelemente 6', 6'', die z.B. eine Durchschaltung des Busmasters 1' auf den Bus 11 zur Folge hat.

Der komplementäre Zustand, bei dem also die Signale 41, 42 den Zustand logisch 0 und die Signale 51, 52 jeweils den Zustand logisch 1 innehaben, bewirkt für die Umschaltsignale 74, 75 jeweils einen Zustand logisch 0, der entsprechend zu einer zum vorbeschriebenen Fall komplementären Schaltstellung der Schaltelemente 6', 6'' führt, hat mithin z.B. eine Durchschaltung des Busmasters 2' auf den Bus 11 zur Folge.

Den Schaltelementen 6', 6'' sind - damit sie die gewünschte Umschaltung bewirken können - selbstverständlich die entsprechenden Einzelleitungen des Bussystems 11 zugeführt. So sind gemäß dem Ausführungsbeispiel - auch wenn in FIG 2 nicht explizit dargestellt - mittels des Schaltelements 6' zur Busumschaltung zumindest die Datenleitung, die Taktleitung, die zwei Steuerleitungen, eine Alarmleitung, eine Readyleitung sowie eine Leitung zum Sperren der Ausgänge der Peripheriebaugruppen 12 umschaltbar. Ferner ist gemäß dem Ausführungsbeispiel mittels des Schaltelements 6" zur Stromversorgungsumschaltung zumindest die Stromversorgung umschaltbar.

Die Adressierung der 16 Eingangs- und 16 Ausgangskanäle je BUS-ASIC 4, 5 und das damit bewirkbare Setzen bestimmter Ausgangsbits auf einen vorgebbaren logischen Zustand bleibt für den Anwender verborgen. Da die BUS-ASICs 4, 5 an den Bus 11 angeschlossen sind, für den Anwender jedoch als Busteilnehmer, insbesondere als separate Busteilnehmer, nicht in Erscheinung treten, werden die BUS-ASICs 4, 5 auch als virtuelle Busteilnehmer 4, 5, als virtuelle Busperipherie 4, 5 oder kurz als virtuelle Peripherie 4, 5 bezeichnet.

Der Datenaustausch, also zumindest das Setzen bestimmter Ausgangsbits auf einen vorgebbaren logischen Zustand, mit der sogenannten virtuellen Peripherie 4, 5 ist der Firmware des jeweiligen Bus-Masters 1', 2' vorbehalten. Somit können die 16 Eingangs- und 16 Ausgangskanäle je BUS-ASIC 4, 5 zur Steuerung der Busumschaltung 6 verwendet werden.

Wie in FIG 2 dargestellt, sind die BUS-ASICs 4, 5 und die Umschaltlogik 7, 7' zu einem Umschaltmittel 10' zusammenfaßbar, wobei das Umschaltmittel 10' als anwenderspezifischer integrierter Schaltkreis - ASIC - realisierbar ist.

Eine Besonderheit der Umschalteinheit 10 besteht darin, daß diese selbst am umzuschaltenden Bus 11 betrieben wird, also keine Sondersignale zum Umschalten erforderlich sind. Damit ist es möglich, vorhandene Busmaster 1', 2', die eigentlich nicht für den Redundanzbetrieb vorgesehen sind, zu redundanten Systemen zu verschalten.

Die Umschalteinheit 10 unterstützt folgende Vorgänge bei der Busumschaltung bzw. beim Betrieb redundanten Busmaster 1', 2' an einem nichtredundanten Bussystem 11:

### I.) Lebenszeichen-Überwachung:

Ein Ausgangskanal 44, 53 jedes ASICs 4, 5 wechselt bei entsprechender Ansteuerung durch den jeweiligen Busmaster 1', 2' bei jedem Peripheriezugriffszyklus zwischen logisch 0 und logisch 1. Der Ausgangskanal 44, 53 ist mit einem Eingangskanal 43, 54 des jeweils anderen ASICs 5, 4 verbunden. Der andere Busmaster 2', 1' kann somit die Funktion des ausgebenden Busmasters 1', 2' überwachen.

Bei einer Ansteuerung des ASICs 4 durch den aktiven Busmaster 1' wechselt z.B. der Ausgangskanal 44 bei jedem Peripheriezugriffszyklus zwischen logisch 0 und logisch 1. Der Ausgangskanal 44 ist mit dem Eingangskanal 54 des anderen BUS-ASICs 5 verbunden, so daß der an den BUS-ASIC 5 angeschlossene passive Busmaster 2' durch Auslesen des Zustands des Eingangskanals 54 den Signalwechsel erkennen kann. Der kontinuierliche Signalwechsel wird als sogenanntes "Lebenszeichen" verstanden.

Bleiben die Signalwechsel aus, ist der ausgebende Busmaster 1', 2' ausgefallen, es liegt eine Notwendigkeit zum Umschalten des Busmasters 1', 2' vor (erstes Umschaltkriterium), wobei mit dem Umschalten der ausgefallene Busmaster zum passiven Busmaster wird und dessen Funktion vom redundanten Busmaster übernommen wird.

### II.) Programmgesteuerte Umschaltung:

Selbstverständlich kann ein Busmaster 1', 2' - z.B. zu Diagnosezwecken - auch programmgesteuert eine Busmasterumschaltung bewirken, ohne daß der zu passivierende Busmaster ausgefallen sein muß (zweites Umschaltkriterium).

### III.) Datenübertragung:

Da der jeweils passive Busmaster 2', 1' zyklisch die Eingangsinformationen der Peripherie benötigt, besteht die Möglichkeit, die Daten durch Verschaltung weiterer Ausgangskanäle mit Eingangskanälen der Gegenseite zu übergeben. Dazu sind auch Steuerleitungen erforderlich. Zur Erhöhung der Datenrate können beispielsweise immer 8 Kanäle parallel übergeben werden. Die damit bewirkbare Datenübertragung erfolgt über die in FIG 2 mit dem Bezugszeichen 45 bezeichnete bidirektionale Verbindung 45. Es ist jedoch selbstverständlich, daß die Verbindung 45 in der Praxis nicht notwendigerweise über eine einzelne bidirektionale Verbindung 45 sondern über eine Vielzahl, z.B. acht, einzelner Leitungen die von den jeweiligen Ausgangskanälen des ersten BUS-ASICs 4, 5 zu den entsprechenden Eingangskanälen des zweiten BUS-ASICs 5, 4 geführt sind, erfolgt.

### IV.) Umschaltlogik:

Die Umschaltlogik unterscheidet zwischen einem sogenannten "Singlemode" und einem sogenannten "Doublemode". Ist einer der Busmaster nicht vorhanden, noch nicht hochgelaufen oder ausgefallen, befindet sich der redundante Busmaster in "Singlemode". Die Busmaster informieren sich gegenseitig über ein Bit der Verbindung 44, 54 bzw. 43, 53 über ihre Funktionsbereitschaft. Ist einer der Busmaster 1', 2' nicht funktionsbereit, arbeitet der andere Busmaster 2', 1' in "Singlemode". Die Funktionsbereitschaft des nichtbereiten Masters 1', 2' wird zyklisch abgefragt, bis dieser wieder bereit ist. Dann erfolgt der Wechsel in den "Doublemode". Im "Doublemode" erfolgt die Abstimmung beider Busmaster vor dem Umschalten. Im "Singlemode" ist eine solche Abstimmung nicht möglich und wird daher ignoriert.

### V.) Mithörtreiber:

Falls die Datenübertragung nicht über die virtuelle Peripherie 4, 5 erfolgen soll, kann der jeweils passive Busmaster 2', 1' die Eingangsinformationen aus dem Übertragungsprotokoll herausfiltern. Dazu ist - wie in der Darstellung gemäß FIG 3 gezeigt - die Datenleitung 11' unabhängig vom jeweiligen Schaltzustand des Busumschalters 6 an den Busmaster 1', 2' herangeführt, indem die Datenleitung 11' an den Schaltelementen 6', 6'' vorbei den Busmastern 1', 2' direkt zugeführt ist. In dem jeweils zu einem Busmaster 1', 2' führenden Zweig der Datenleitung 11' ist jeweils zur Entkopplung ein Mithörtreiber 13 vorgesehen.

### Zusatzdatenaustausch:

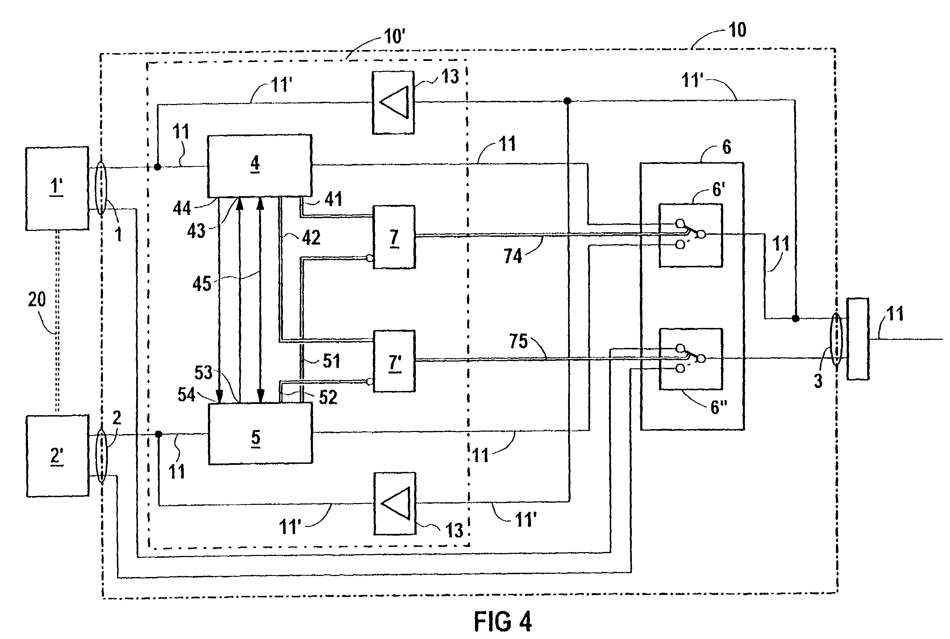

Als weitere Alternative für den Datenaustausch zwischen den Busmastern 1', 2' ist gemäß der Darstellung in FIG 4 auch ein zweites, zusätzliches Bussystem 20, das einen direkten Datenaustausch zwischen den redundanten Busmastern 1', 2' ermöglicht, denkbar. Auch dieses zusätzliche Bussystem 20 ist optional und stellt eine weitere vorteilhafte Ausgestaltung der Erfindung dar.

Zusammenfassend läßt sich die vorliegende Erfindung wie folgt kurz beschreiben:

Um an einem grundsätzlich nichtredundanten Bussystem 11 jeweils einen Busmaster 1' aus einer Gruppe redundanter Busmaster 1', 2' zu betreiben, ist eine Umschalteinheit 10 vorgesehen, wobei die Besonderheit der Umschalteinheit 10 darin besteht, daß diese selbst am umzuschaltenden Bus 11 betrieben wird und folglich keine Sondersignale zum Umschalten der Busmaster 1', 2' erforderlich sind.

Der zentrale Aspekt der vorliegenden Erfindung ist daher, daß die Umschalteinheit 10 selbst am umzuschaltenden Bus 11 betrieben wird, also keine Sondersignale zum Umschalten erforderlich sind. Damit ist es möglich, vorhandene Busmaster, die eigentlich nicht für einen Redundanzbetrieb vorgesehen sind, zu redundanten Systemen zu verschalten.

## Patentansprüche

1. Busmasterumschalteinheit (10) zum Anschalten eines Busmasters (1', 2') aus einer Gruppe von mindestens zwei redundanten Busmastern (1', 2') an ein nichtredundantes Bussystem (11), wobei die Busmasterumschalteinheit (10)
- zumindest Anschlüsse (1, 2) zum Anschluß jeweils eines Busmasters (1', 2') und zumindest einen Anschluß (3) zum Anschluß des nichtredundanten Bussystems (1) und
- zumindest einen Busumschalter (6) und an den Bus (11) angeschlossene Mittel (4, 5) zur Ansteuerung des Busumschalters (6) aufweist,
- wobei die Mittel (4, 5) ausschließlich durch den Busmaster (1', 2') ansteuerbar sind und
- wobei der Busumschalter (6) je nach Schaltstellung eine Anschaltung jeweils eines an die Busmasterumschalteinheit (10) angeschlossenen Busmasters (1', 2') an den Bus (11) bewirkt.

2. Busmasterumschalteinheit nach Anspruch 1, **dadurch gekennzeichnet, daß** die Mittel (4, 5) Ausgänge (41, 42, 51, 52) aufweisen, welche bei einer entsprechenden Ansteuerung durch den Busmaster (1', 2') einen vorgebbaren oder vorgegebenen logischen Zustand zur Ansteuerung des Busumschalters (6) einnehmen und damit eine definierte Schaltstellung des Busumschalters (6) bewirken.

3. Busmasterumschalteinheit nach Anspruch 2, **dadurch gekennzeichnet, daß** die Mittel (4, 5) als anwendungsspezifische integrierte Schaltkreise - ASIC - (4, 5) mit einer Mehrzahl von Ein- (43, 45, 53) bzw. Ausgängen (41, 42, 44, 45, 51, 52, 54) ausgebildet sind, wobei die Ein- (43, 45, 53) bzw. Ausgänge (41, 42, 44, 45, 51, 52, 54) vom jeweils angeschlossenen Busmaster (1, 2) schreib- bzw. lesbar sind.

4. Busmasterumschalteinheit nach Anspruch 3, **dadurch gekennzeichnet, daß** durch einen durch den Busmaster (1', 2') bewirkten Datentransfer auf dem Bus (11) ein periodischer Signalwechsel zumindest eines Ausgangs (44, 53) des jeweiligen anwendungsspezifischen integrierten Schaltkreises (4, 5) bewirkbar ist und daß der Signalwechsel für den anderen Busmaster (2', 1') über zumindest einen Eingang (43, 54) des jeweiligen anwendungsspezifischen integrierten Schaltkreises (5, 4) erkennbar ist.

5. Busmasterumschalteinheit nach Anspruch 3, **dadurch gekennzeichnet, daß** ein Datentransfer zwischen einem ersten an die Busmasterumschalteinheit (10) angeschlossenen Busmaster (1') und einem zweiten an die Busmasterumschalteinheit (10) angeschlossenen Busmaster (2') über die Ein- (43, 45, 53) bzw. Ausgänge (41, 42, 44, 45, 51, 52, 54) der anwendungsspezifischen integrierten Schaltkreise (4, 5) erfolgt.

6. Busmasterumschalteinheit nach Anspruch 3, **dadurch gekennzeichnet, daß** der Bus (11) zumindest eine Datenleitung (11') umfaßt und daß die Datenleitung (11') jedem an die Busmasterumschalteinheit (10) anschließbaren Busmaster (1', 2') unter Umgehung des Busumschalters (6) zugeführt ist.

7. Verfahren zum Betreiben redundanter Busmaster (1', 2') an einem nichtredundanten Bussystem (11),
- wobei zum Anschalten eines Busmasters (1', 2') aus einer Gruppe von mindestens zwei redundanten Busmastern (1', 2') an das Bussystem (11) eine Busmasterumschalteinheit (10) vorgesehen ist, die
- zumindest Anschlüsse (1, 2) zum Anschluß jeweils eines Busmasters (1', 2') und zumindest einen Anschluß (3) zum Anschluß des nichtredundanten Bussystems (1) und
- zumindest einen Busumschalter (6) und an den Bus (11) angeschlossene Mittel (4, 5) zur Ansteuerung des Busumschalters (6) aufweist,
- wobei die Mittel (4, 5) durch den Busmaster (1', 2') angesteuert werden und
- wobei durch den Busumschalter (6) je nach Schaltstellung eine Anschaltung jeweils eines an die Busmasterumschalteinheit (10) angeschlossenen Busmasters (1', 2') an den Bus (11) bewirkt wird.

8. Verfahren nach Anspruch 7, **dadurch gekennzeichnet, daß** die Mittel (4, 5) als anwendungsspezifische integrierte Schaltkreise - ASIC - (4, 5) mit einer Mehrzahl von Ein- (43, 45, 53) bzw. Ausgängen (41, 42, 44, 45, 51, 52, 54) ausgebildet sind und daß ein durch einen Busmaster (1', 2') bewirkter Datentransfer auf dem Bus (11) einen periodischen Signalwechsel zumindest eines Ausgangs (44, 53) des jeweiligen anwendungsspezifischen integrierten Schaltkreises (4, 5) bewirkt und daß der Signalwechsel für den anderen Busmaster (2', 1') über zumindest einen Eingang (43, 54) des jeweiligen anwendungsspezifischen integrierten Schaltkreises (5, 4) erkannt wird.

9. Verfahren nach Anspruch 7, **dadurch gekennzeichnet, daß** ein Datentransfer zwischen einem ersten an die Busmasterumschalteinheit (10) angeschlossenen Busmaster (1') und einem zweiten an die Busmasterumschalteinheit (10) angeschlossenen Busmaster (2') über die Ein- (43, 45, 53) bzw. Ausgänge (41, 42, 44, 45, 51, 52, 54) der anwendungsspezifischen integrierten Schaltkreise (4, 5) erfolgt.

10. Verfahren nach Anspruch 7, **dadurch gekennzeichnet, daß** ein Datentransfer zwischen einem ersten an die Busmasterumschalteinheit (10) angeschlossenen Busmaster (1') und einem zweiten an die Busmasterumschalteinheit (10) angeschlossenen Busmaster (2') über ein zusätzliches Bussystem (20) erfolgt.

## Claims

1. Bus master changeover unit (10) for connection of a bus master (1', 2') from a group of at least two redundant bus masters (1', 2') to a non-redundant bus system (11), whereby the bus master changeover unit (10)
- at least has connection points (1, 2) for attachment of a bus master (1', 2') in each case, and has at least one connection point (3) for attachment of the non-redundant bus system (1), and
- at least has one bus changeover switch (6) and facilities (4, 5) attached to the bus (11) for controlling the bus changeover switch (6),
- whereby the facilities (4, 5) can be controlled exclusively by the bus master (1', 2'), and
- whereby the bus changeover switch (6), according to the switch position, effects a connection to the bus (11) of one particular bus master (1', 2') which is attached to the bus master changeover unit (10).

2. Bus master changeover unit according to Claim 1, **characterised in that** the facilities (4, 5) have outputs (41, 42, 51, 52) which, in the event of corresponding control action by the bus master (1', 2'), assume a predefinable or predefined logic state for controlling the bus changeover switch (6) and thereby effect a defined switch position for the bus changeover switch (6).

3. Bus master changeover unit according to Claim 2, **characterised in that** the facilities (4, 5) are designed as application-specific integrated circuits - ASIC - (4, 5) with multiple inputs (43, 45, 53) and/or outputs (41, 42, 44, 45, 51, 52, 54), whereby the inputs (43, 45, 53) and/or outputs (41, 42, 44, 45, 51, 52, 54) can be written to or read respectively by the particular bus master (1, 2) attached.

4. Bus master changeover unit according to Claim 3, **characterised in that** a periodic signal change of at least one output (44, 53) of the relevant application-specific integrated circuit (4, 5) can be effected by means of a data transfer operation on the bus (11) effected by the bus master (1', 2'), and that the signal change can also be detected for the other bus master (2', 1') by way of at least one input (43, 54) of the relevant application-specific integrated circuit (5, 4).

5. Bus master changeover unit according to Claim 3, **characterised in that** a data transfer operation between a first bus master (1') attached to the bus master changeover unit (10) and a second bus master (2') attached to the bus master changeover unit (10) takes place by way of the inputs (43, 45, 53) and/or outputs (41, 42, 44, 45, 51, 52, 54) of the application-specific integrated circuits (4, 5).

6. Bus master changeover unit according to Claim 3, **characterised in that** the bus (11) comprises at least one data line (11') and that the data line (11') is routed to each bus master (1', 2') capable of attachment to the bus master changeover unit (10) whilst bypassing the bus changeover switch (6).

7. Method for the operation of redundant bus masters (1', 2') on a non-redundant bus system,
- whereby in order to connect a bus master (1', 2') from a group of at least two redundant bus masters (1', 2') to the bus system (11) a bus master changeover unit (10) is provided which
- at least has connection points (1, 2) for attachment of a bus master (1', 2') in each case, and has at least one connection point (3) for attachment of the non-redundant bus system (1), and
- at least has one bus changeover switch (6) and facilities (4, 5) attached to the bus (11) for controlling the bus changeover switch (6),
- whereby the facilities (4, 5) are controlled by the bus master (1', 2'), and
- whereby, according to the switch position, a connection to the bus (11) of one particular bus master (1', 2') which is attached to the bus master changeover unit (10) is effected by the bus changeover switch (6).

8. Method according to Claim 7, **characterised in that** the facilities (4, 5) are designed as application-specific integrated circuits - ASIC - (4, 5) with a plurality of inputs (43, 45, 53) and/or outputs (41, 42, 44, 45, 51, 52, 54), and that a data transfer operation on the bus (11) effected by a bus master (1', 2') effects a periodic signal change of at least one output (44, 53) of the relevant application-specific integrated circuit (4, 5), and that the signal change is detected for the other bus master (2', 1') by way of at least one input (43, 54) of the relevant application-specific integrated circuit (5, 4).

9. Method according to Claim 7, **characterised in that** a data transfer operation between a first bus master (1') attached to the bus master changeover unit (10) and a second bus master (2') attached to the bus master changeover unit (10) takes place by way of the inputs (43, 45, 53) and/or outputs (41, 42, 44, 45, 51, 52, 54) of the application-specific integrated circuits (4, 5).

10. Method according to Claim 7, **characterised in that** a data transfer operation between a first bus master (1') attached to the bus master changeover unit (10) and a second bus master (2') attached to the bus master changeover unit (10) takes place by way of an additional bus system (20).

## Revendications

1. Unité de commutation de maître de bus (10) pour mettre en service sur un système de bus non redondant (11) un maître de bus (1', 2') d'un groupe composé d'au moins deux maîtres de bus redondants (1', 2'), l'unité de commutation de maître de bus (10) comportant
- au moins des bornes (1, 2) pour le raccordement respectivement d'un maître de bus (1', 2') et au moins une borne (3) pour le raccordement du système de bus non redondant (11) et
- au moins un commutateur de bus (6) et des moyens (4, 5) raccordés au bus (11) et destinés à la commande du commutateur de bus (6),
- les moyens (4, 5) étant commandables exclusivement par le maître de bus (1', 2') et
- le commutateur de bus (6) provoquant selon sa position de commutation une mise en service respectivement d'un maître de bus (1', 2'), raccordé à l'unité de commutation de maître de bus (10), sur le bus (11).

2. Unité de commutation de maître de bus selon la revendication 1, **caractérisée par le fait que** les moyens (4, 5) comportent des sorties (41, 42, 51, 52) qui prennent lors d'une commande correspondante par le maître de bus (1', 2') un état logique prescrit ou pouvant être prescrit afin de commander le commutateur de bus (6) et qui donnent ainsi une position de commutation définie du commutateur de bus (6).

3. Unité de commutation de maître de bus selon la revendication 2, **caractérisée par le fait que** les moyens (4, 5) sont conçus comme des circuits intégrés spécifiques à l'application ou ASIC (4, 5) comportant plusieurs entrées (43, 45, 53) et sorties (41, 42, 44, 45, 51, 52, 54), les entrées (43, 45, 53) et sorties (41, 42, 44, 45, 51, 52, 54) pouvant respectivement être écrites et lues par le maître de bus (1', 2') respectivement raccordé.

4. Unité de commutation de maître de bus selon la revendication 3, **caractérisée par le fait qu'**un changement de signal périodique d'au moins une sortie (44, 53) du circuit intégré spécifique à l'application (4, 5) respectif peut être provoqué par un transfert de données provoqué par le maître de bus (1', 2') sur le bus (11) et que le changement de signal peut être détecté par l'autre maître de bus (2', 1') par l'intermédiaire d'au moins une entrée (43, 54) du circuit intégré spécifique à l'application (5, 4) respectif.

5. Unité de commutation de maître de bus selon la revendication 3, **caractérisée par le fait qu'**un transfert de données entre un premier maître de bus (1') raccordé à l'unité de commutation de maître de bus (10) et un deuxième maître de bus (2') raccordé à l'unité de commutation de maître de bus (10) s'effectue par l'intermédiaire des entrées (43, 45, 53) et sorties (41, 42, 44, 45, 51, 52, 54) du circuit intégré spécifique à l'application (4, 5).

6. Unité de commutation de maître de bus selon la revendication 3, **caractérisée par le fait que** le bus (11) comprend une ligne de données (11') et que la ligne de données (11') est envoyée à chaque maître de bus (1', 2'), pouvant être raccordé à l'unité de commutation de maître de bus (10), sans passer par le commutateur de bus (6).

7. Procédé pour l'exploitation de maîtres de bus redondants (1', 2') dans un système de bus non redondant (11),
- une unité de commutation de maître de bus (10) étant prévue pour mettre en service sur le système de bus (11) un maître de bus (1', 2') d'un groupe d'au moins deux maîtres de bus redondants (1', 2'), laquelle unité de commutation de maître de bus comporte
- au moins des bornes (1,2) pour le raccordement à chaque fois d'un maître de bus (1', 2') et au moins une borne (3) pour le raccordement du système de bus non redondant (11) et
- au moins un commutateur de bus (6) et des moyens (4, 5) raccordés au bus (11) et destinés à la commande du commutateur de bus (6),
- les moyens (4, 5) étant commandés par le maître de bus (1', 2') et
- le commutateur de bus (6) provoquant selon sa position de commutation une mise en service à chaque fois d'un maître de bus (1', 2'), raccordé à l'unité de commutation de maître de bus (10), sur le bus (11).

8. Procédé selon la revendication 7, **caractérisé par le fait que** les moyens (4, 5) sont conçus comme des circuits intégrés spécifiques à l'application ou ASIC (4, 5) comportant plusieurs entrées (43, 45, 53) et sorties (41, 42, 44, 45, 51, 52, 54), qu'un changement de signal périodique d'au moins une sortie (44, 53) du circuit intégré spécifique à l'application (4, 5) respectif peut être provoqué par un transfert de données provoqué par le maître de bus (1', 2') sur le bus (11) et que le changement de signal peut être détecté par l'autre maître de bus (2', 1') par l'intermédiaire d'au moins une entrée (43, 54) du circuit intégré spécifique à l'application (5, 4) respectif.

9. Procédé selon la revendication 7, **caractérisé par le fait qu'**un transfert de données entre un premier maître de bus (1') raccordé à l'unité de commutation de maître de bus (10) et un deuxième maître de bus (2') raccordé à l'unité de commutation de maître de bus (10) s'effectue par l'intermédiaire des entrées (43, 45, 53) et sorties (41, 42, 44, 45, 51, 52, 54) du circuit intégré spécifique à l'application (4, 5).

10. Procédé selon la revendication 7, **caractérisé par le fait qu'**un transfert de données entre un premier maître de bus (1') raccordé à l'unité de commutation de maître de bus (10) et un deuxième maître de bus (2') raccordé à l'unité de commutation de maître de bus (10) s'effectue par l'intermédiaire d'un système de bus supplémentaire (20).
